Europäisches Patentamt

European Patent Office

Office européen des brevets

(19)

(11) Publication number: **0 330 300**

**A1**

## EUROPEAN PATENT APPLICATION

(21) Application number: 89300351.7

(22) Date of filing: 16.01.89

(51) Int. Cl.⁴: **B60P 7/13**

(30) Priority: 24.02.88 GB 8804263

(43) Date of publication of application:
30.08.89 Bulletin 89/35

(84) Designated Contracting States:
AT BE CH DE ES FR GB GR IT LI LU NL SE

(71) Applicant: **GEORGE BLAIR PUBLIC LIMITED COMPANY**
**Pottery Lane**
**Forth Newcastle upon Tyne NE1 3RB(GB)**

(72) Inventor: **Reynard, Kenneth**
**The Den Croft Heads**
**Thirsk North Yorkshire(GB)**

(74) Representative: **Sanderson, Michael John et al**
**MEWBURN ELLIS & CO 2/3 Cursitor Street**
**London EC4A 1BQ(GB)**

(54) Front locking pin assembly for locking a container to a trailer or the like.

(57) A front locking pin assembly for locking to a trailer a container provided with apertures at predetermined locations in the lower regions of the front walls thereof, comprises a body member (12) for securing to the trailer chassis, and an elongate pin member (20) slidable in the body member (12) in a direction fore and aft of the trailer between an inoperative position remote from the container (4) and an operative position in which a head portion (32) of the pin member (20) extends into the container (4) through an aperture (10) in the front wall thereof. The assembly further includes resilient means (28) reacting between the body member (12) and the pin member (20) to permit substantially universal movement of the head portion (32) of the pin member (20) over a limited angular range relative to the body member (12). In the operative position of the pin member (20), the head portion (32) can be moved into a locking position preventing withdrawal thereof from the container.

# FRONT LOCKING PIN ASSEMBLY FOR LOCKING A CONTAINER TO A TRAILER OR THE LIKE

This invention relates to front locking pin assemblies for locking containers to trailers or the like, and has particular, though not exclusive, application to such assemblies for locking I.S.O. freight containers provided with conventional corner fittings to the chassis of articulated trailers.

Freight containers and similar modular units are normally transported by road on trailers the chassis of which are provided with devices thereon for locating and securing the containers to the trailers.

Conventionally, the rear end of a container is secured to the chassis by means of twistlock-type devices received within the apertures in the lower walls of associated corner fittings at the rear lower corners of the container.

However, in certain designs of trailers, commonly known as 'gooseneck' trailers, it is necessary to keep the height of trailer-container combinations within certain limits, and twistlock-type devices are not used to secure the front end of a container to such a trailer.

Instead, it is conventional practice to use horizontal locking pins projecting rearwardly of the trailer through the front bolster of the chassis to be received within the apertures in the front walls of the front lower corner fittings of the container. These pins thus serve to locate the front end of the container on the chassis by preventing relative vertical and lateral movement between the container and the chassis, the transverse dimensions of the locking pins being chosen to accommodate the maximum allowable tolerances that can occur in the position of the aperture in the associated front corner fitting due to manufacturing techniques and relative location between the trailer and the container.

Containers can be of different lengths, and it is now well-established practice to provide trailers which can be extended to suit the particular length of container to be transported thereby. Such trailers commonly comprise two sections, one of which constitutes the front of the trailer and is provided with a pick-up plate and king-pin for connection to the tractor and the other of which constitutes the rear of the trailer and is provided with suspension, wheels, tyres and associated equipment.

These two sections of the trailer are held together by a locking mechanism which is positioned dependent upon the desired length of the trailer and which, once positioned, prevents relative movement between the trailer sections.

In the event of an extensible trailer being adjusted for length and the associated locking mechanism not being secured in its operative position, it will be appreciated that, with a container secured on the trailer as detailed above, a situation could arise in which the trailer sections separated. For example, if the tractor-trailer combination was to brake, the rear section of the trailer complete with the container attached thereto by the twistlock-type connectors could separate from the front section of the trailer which is secured to the tractor by the king-pin and coupler. The front locking pins are not in themselves capable of preventing rearward movement of the container relative thereto and are merely withdrawn from the container in the above circumstances as a result of the relative fore and aft movement between the two trailer sections.

It would be desirable to be able to provide a front locking pin assembly of the above type capable of preventing relative fore and aft movement between the container and the associated trailer section and also capable of accommodating manufacturing tolerances in the associated corner fitting of the container and variations in the precise location of the container on the trailer.

According to the present invention there is provided a front locking pin assembly for locking a container provided with apertures at predetermined locations in the lower regions of the front walls thereof to a trailer, the assembly comprising a body member adapted to be secured to the trailer chassis, conveniently to the front transverse bolster of said chassis, and an elongate pin member extending through said body member to be slidable relative to said body member in a direction fore and aft of the trailer between an inoperative position remote from the container and an operative position in which a head portion of the pin member extends through an aperture in the front wall of the container, and resilient means reacting between the body member and the pin member to permit substantially universal movement of the head portion of the pin member over a limited angular range relative to the body member, the head portion of the pin member, in the operative position of the pin member, being movable into a locking position preventing withdrawal of said head portion through the aperture in the front wall of the container.

It will be appreciated that the resilient means reacting between the pin member and the body member enable swivelling movement of the pin member relative to the body member whereby the head portion of the pin member can be aligned with the aperture in the front wall of the container regardless of the precise location of said aperture relative to the front locking pin assembly within predetermined manufacturing tolerances and as a result of the configurations of the container and trailer.

Further, the movability of the head portion of the pin member into said locking position within the container is such as effectively to lock the front end of the container to the trailer whereby any inadvertent failure to secure the two sections of a trailer together will not result in separation of said two sections in the circumstances detailed above.

Preferably the pin member is slidable in a rigid sleeve member axially fixed relative to the body member but pivotal relative thereto.

Conveniently the sleeve member has mounted thereon a resilient bush reacting between the sleeve member and the body member to enable said pivoting movement of the sleeve member relative to the body member.

In one embodiment of the invention, the pin member is carried in a mounting housed within an aperture in a wall of the body member, said mounting comprising a rigid sleeve member in which the pin member is slidable, a shear block secured to, to surround one end extent of, the sleeve member to react against a first face of said wall of the body member, a collar secured to, to surround the other end extent of, the sleeve member, and a resilient annular bush mounted on the sleeve member between the shear block and the collar to react between said collar and the opposed face of said wall of the body member.

A preferred application of the invention is in the locking of I.S.O. freight containers to trailers, such containers being provided with standard corner fittings the apertures in the front walls of which are of asymmetrical, substantially oval shape.

In such an application, the pin member comprises a substantially cylindrical stem portion slidable within the sleeve member and a head portion including a lug projecting laterally outwardly of the stem portion, the pin member being rotatable about the central longitudinal axis of the stem portion, the arrangement being such that, with the major axis of the head portion parallel with the major axis of said aperture, the head portion can be inserted through the aperture in the corner fitting, subsequent rotation of the pin member, conveniently through 90°, displacing the head portion into its locking position, in which the lug reacts against the inner face of the front wall of the corner fitting to prevent withdrawal of the pin member therefrom.

By way of example only, an embodiment of the invention will now be described in greater detail with reference to the accompanying drawings of which:

Fig. 1 is a side view of an assembly according to the invention with the pin member in its inoperative position;

Fig. 2 is a side view of the assembly of Fig. 1 with the pin member in its operative position;

Fig. 3 is a plan view from above of the assembly of Fig. 1.,

Fig. 4 is a front view of the assembly of Fig. 1 in the direction of arrow 'A', and

Fig. 5 is a part longitudinal vertical section through part of the assembly of Fig. 1 to a larger scale.

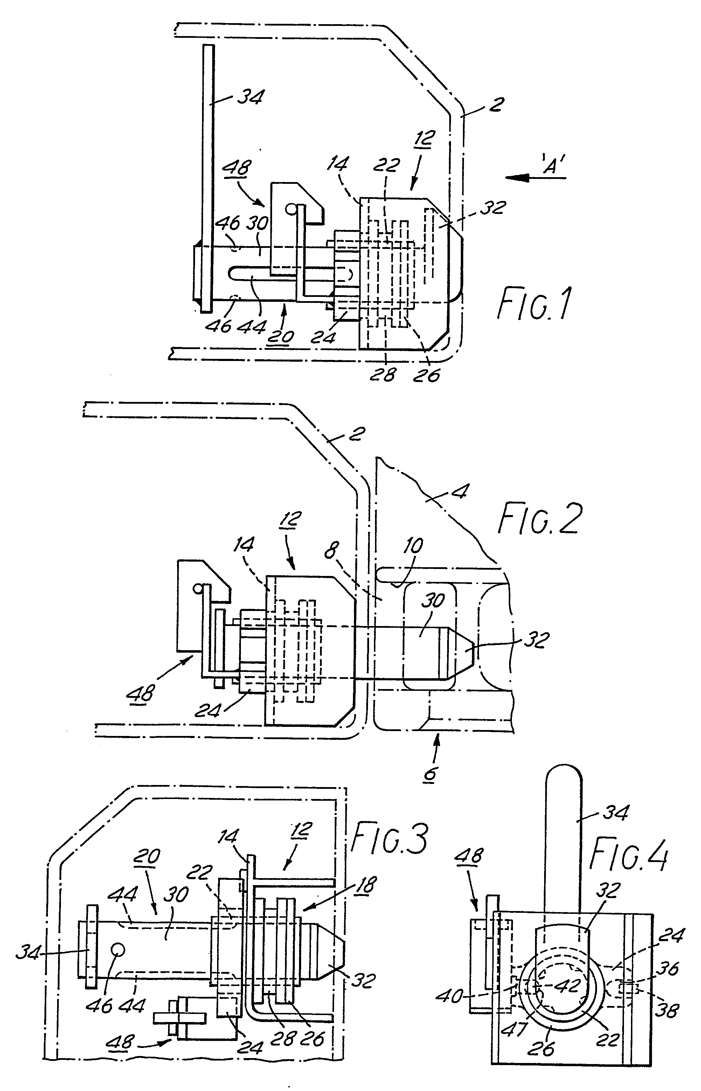

Referring to the drawings, part of the transverse bolster at the front of a trailer is shown at 2, it being conventional practice to mount a pair of retractable locking pins one adjacent each end of the bolster to co-operate with the apertures in the front walls of the lower corner fittings of an I.S.O container carried on the trailer. Part of a container is shown at 4 in Fig. 2, the container being provided with a lower corner fitting 6 having a front wall 8 in which is provided an aperture 10. The front end of the container 4 abuts the bolster 2, the lower surface of the container being channelled to seat over the chassis gooseneck to locate the container laterally on the trailer. Thus it will be appreciated that the precise location of the aperture 10 into which the fixedly-located locking pin has to be inserted can vary in dependence upon manufacturing tolerances in the container and corner fitting and in dependence upon the co-operation between the channelled base of the container and the gooseneck of the trailer, as well as due to chassis racking, damaged containers, damaged bolsters and the like.

The assembly of the invention provides an arrangement in which a retractable pin member can be inserted through the aperture in the corner fitting for significantly varying positions of said aperture relative to the trailer.

The assembly comprises a housing indicated generally at 12 welded to the bolster 2 and including a transverse wall 14 provided with a circular aperture 16 therethrough.

Located in said aperture 16 is a mounting indicated generally at 18 for an elongate pin member 20, the mounting comprising a rigid sleeve 22 in which the pin member is slidably housed, and an annular shear block 24 welded to, to surround one end extent of, the sleeve 22 and located to one side of the wall 14 of the housing 12.

An annular collar 26 is mounted on and welded to the other end extent of the sleeve 22 and a bush 28 of resilient material such as polyurethane surrounds the intermediate region of the sleeve 22 to react between the collar 26 and the wall 14 of the housing 12.

It will be appreciated that the position of the mounting 18 relative to the housing 12 is substantially axially fixed by virtue of the co-operation between the shear block 24 and the wall 14 in one direction and the co-operation between the bush 28 and said wall 14 in the other direction.

However, the resilient nature of the bush 28 enables the mounting as a whole to pivot relative to the wall 14 over the angular ranges indicated in Figs. 1 and 3, typically 32° in a vertical plane and 22° in a horizontal plane.

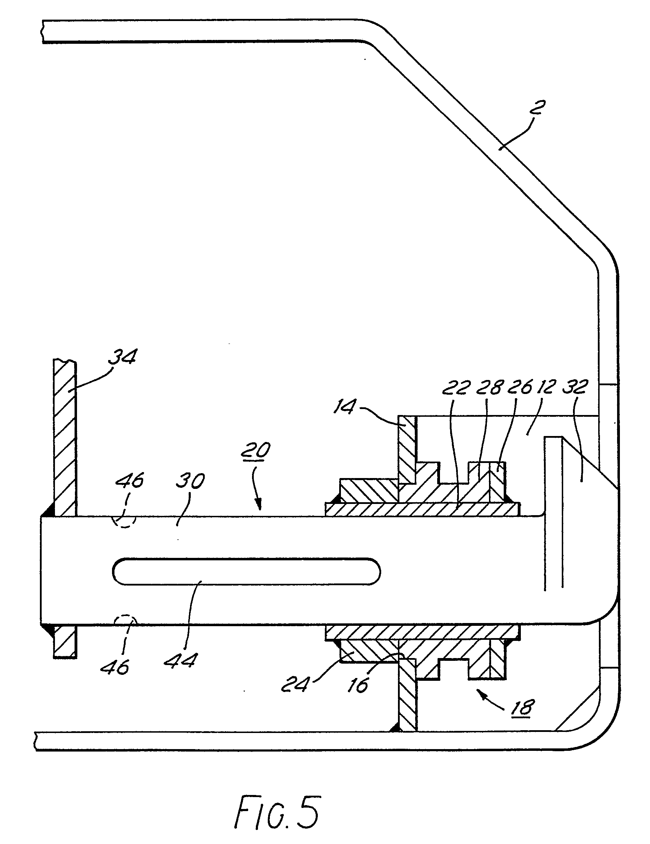

The pin member 20 comprises a cylindrical stem portion 30 slidaby mounted in the sleeve 22 and provided with a head portion 32 projecting laterally of the stem portion 30 as best seen in Figs. 4 and 5, the transverse shape of the head portion 32 conforming substantially with the shape of the aperture 10 in the corner fitting 6 whereby said head portion 32 can pass through said aperture.

A radially extending handle 34 is secured to the rear end of the stem portion whereby the pin member 20, as well as being slidable longitudinally within the sleeve 22, can be rotated therein about the central longitudinal axis thereof.

One side region of the shear block 24 is recessed or bifurcated at 36 as best seen in Fig. 4, a stop member 38 welded on the rear face of the wall 14 of the housing 12 being positioned in said recess between the bifurcations whereby rotation of the mounting 18 relative to the housing 12 is prevented by angular co-operation between said stop member 38 and the shear block 24.

The other side region of the shear block 24 is radially recessed at 40 (Fig. 4) to receive therein a ball bearing 42 resiliently urged towards the bore of the shear block and therefore into resilient engagement with the external surface of the stem portion 30 of the pin member 20.

Said external surface of the stem portion is formed with a pair of diametrically opposed longitudinal slots therein one of which is shown at 44 adapted to receive the bearing 42, said co-operation between the ball bearing 42 and a slot 44 serving to guide the pin member 20 in its longitudinal movement relative to the sleeve 22.

A pair of indents 46 displaced 180° from each other and 90° from the slots 44 are formed in the stem portion 30 adjacent the rear end thereof for reasons which will become apparent.

It will be appreciated that the arrangement so far described, as well as permitting the head portion 32 of the pin member to be moved longitudinally between the inoperative, storage position shown in Figs. 1 and 3 to 5 and an operative position extending outwardly of the bolster 2, enables the pin member to be pivoted with the mounting 18 substantially universally over an angular range of typically 32° in a vertical plane and 22° in a horizontal plane, thus providing a flexible alignment capability to the head portion 32 utilised as follows.

In use of the assembly, the container 4 and corner fittings 6 are positioned on the associated trailer to abut the bolster 2 with the pin members 20 of the associated assemblies, one to each side of the bolster 2, in their retracted, inoperative positions.

Each pin member 20 has a storage position in which the handle 34 is displaced by about 30° from the vertical, this position being determined by co-operation between the ball bearing 42 and a suitably located indent 47 in the intermediate regions of the stem portion 30 as best seen in Fig. 4.

On movement of the handles 34 to their upright positions, to determine the inoperative positions of the pin members 20, the head portions 32 of the pin members 20 may or may not be axially aligned with the apertures 10 in the corner fittings 6. If they are not, the flexible nature of the mountings 18 permits the head portions 32 to be manoeuvred by means of the handles 34 until they are aligned with said apertures.

The pin members 20 are then slid forwards in their mountings 18 until the head portions 32 thereof are wholly received within the associated corner fittings 6 as seen in Fig. 2 and the pin members 20 are then rotated through 90° by means of the handles 34 until the ball bearings 42 snap into indents 46 to locate the pin members 20 in their operative positions.

In this operative position of each pin member 20, the head portion 32 thereof is angularly displaced within the corner fitting 6 as shown in Fig. 2 whereby the radial extension of said head portion 32 is located behind the front wall 8 of the corner fitting 6 to prevent withdrawal of the head portion 32 from the fitting 6. Thus the front end of the container 4 is effectively locked to the trailer by the pin members 20.

The assembly further includes stop means 48 welded to the shear block 24 which serve to co-operate with the handle 34 of the pin member 20 to prevent retraction of the pin member 20 when in its operative position.

Thus there is provided a front locking pin assembly for securing the front of a container to a trailer which, because of the flexible, resilient mounting of the pin member thereof relative to its fixed housing, is able to adopt an effective operative locking position regardless of any misalignment between the bolster and the container due to manufacturing tolerances, chassis racking or damaged containers, bolsters or the like. Further, the construction of the pin member is such as to lock the container to the trailer whereby trailer separation as detailed above is resisted.

The precise construction of the assembly may differ from that shown without departing from the scope of the invention. For example, the flexible mounting of the pin member in its housing may be achieved other than by means of a bush of resilient material - springs or the like may be used instead. The locking of the head portion within the corner fitting may be achieved other than be providing a fixed radial lug thereon - extensible dogs or the like within the head portion may be actuated when the pin member is in its operative position.

Other modifications and variations from the illustrated arrangement will be apparent to those skilled in the art.

## Claims

1. A front locking pin assembly for locking a container provided with apertures at predetermined locations in the lower regions of the front walls thereof to a trailer, the assembly comprising a body member (12) adapted to be secured to the trailer chassis (2), and an elongate pin member (20) extending through said body member (12) to be slidable relative to the body member (12) in a direction fore and aft of the trailer between an inoperative position remote from the container (4) and an operative position in which a head portion (32) of the pin member (20) extends through an aperture (10) in the front wall (8) of the container (4) characterised by resilient means (28) reacting between the body member (12) and the pin member (20) to permit substantially universal movement of the head portion (32) of the pin member (20) over a limited angular range relative to the body member (12), the head portion (32) of the pin member (20), in the operative position of the pin member (20), being movable into a locking position preventing withdrawal of said head portion (32) through the aperture (10) in the front wall (8) of the container (4).

2. An assembly as claimed in claim 1 in which the pin member (20) is slidable in a rigid sleeve member (22) axially fixed relative to the body member (12) but pivotal relative thereto.

3. An assembly as claimed in claim 2 in which the sleeve member (22) has mounted thereon a resilient bush (28) reacting between the sleeve member (22) and the body member (12) to enable said pivoting movement of the sleeve member (22) relative to the body member (12).

4. An assembly as claimed in claim 2 or claim 3 in which the pin member (20) is carried in a mounting (18) housed within an aperture (16) in a wall (14) of the body member (12), said mounting (18) comprising a rigid sleeve member (22) in which the pin member (20) is slidable, a shear block (24) secured to, to surround one end extent of, the sleeve member (22) to react against a first face of said wall (14) of the body member (12), a collar (26) secured to, to surround the other end extent of, the sleeve member (22), and a resilient annular bush (28) mounted on the sleeve member (22) between the shear block (24) and the collar (26) to react between said collar (26) and the opposed face of said wall (14) of the body member (12).

5. An assembly as claimed in any one of claims 2 to 4 for locking an I.S.O. freight container provided with standard corner fittings the apertures in the front walls of which are of asymmetrical, substantially oval shape, to a trailer, the pin member (20) comprising a substantially cylindrical stem portion (30) slidable within the sleeve member (22) and a head portion (32) including a lug projecting laterally outwardly of the stem portion (30), the pin member (20) being rotatable about the central longitudinal axis of the stem portion (30), the arrangement being such that, with the major axis of the head portion (32) parallel with the major axis of said aperture (10), the head portion (32) can be inserted through the aperture (10) in the corner fitting (6), subsequent rotation of the pin member (20) displacing the head portion (32) into its locking position, in which the lug reacts against the inner face of the front wall (8) of the corner fitting (6) to prevent withdrawal of the pin member (20) therefrom.

*FIG.1*

*FIG.2*

*FIG.3*

*FIG.4*

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | US-A-4 266 820 (WHALEY et al.)<br>* figures 2-5 *<br>--- | 1 | B 60 P 7/13 |
| A | GB-A-1 284 842 (RUBERY, OWEN & CO.)<br>--- | | |
| A | US-A-4 626 155 (HLINSKY et al.)<br>----- | | |

**TECHNICAL FIELDS SEARCHED (Int. Cl.4)**

B 60 P 7/00

The present search report has been drawn up for all claims

| Place of search | Date of completion of the search | Examiner |
|---|---|---|
| BERLIN | 26-04-1989 | LUDWIG H J |